# EUROPEAN PATENT APPLICATION

(11) **EP 0 800 181 A2**
(43) Date of publication of application: **08.10.1997**
(21) Application number: 97302182.7
(22) Date of filing: 27.03.1997
(51) Int. Cl.: G21C 3/33, G21C 3/322

(54) **Fuel bundle for a nuclear reactor**

(30) Priority: 01.04.1996 US 625882
(71) Applicant: GENERAL ELECTRIC COMPANY, Schenectady, NY 12345 (US)
(72) Inventor: Dix, Gary Errol, Saratoga, California 95070 (US); Matzner, Bruce, San Jose, California 95124 (US)
(74) Representative: Pedder, James Cuthbert

(57) **Abstract**

A part-length fuel or moderator rod (22) has an upper end (32) terminating just short of an overlying spacer (S5). A support element (35) extends from the upper end to the spacer (S5) to structurally support the part-length rod (22). The structural support is designed to minimize pressure drop across the spacer opening (36) such that an increased weight of fuel or moderator can be supplied to the part-length rod (22) without increasing pressure drop across the fuel bundle.

## Description

The present invention relates in general to nuclear reactors having fuel bundles with steam vent regions, e.g., steam vent volumes above the upper ends of part-length rods in the nuclear fuel bundle and particularly relates to a nuclear fuel bundle constructed to optimize pressure drop and fuel weight.

In a boiling water nuclear reactor, a plurality of nuclear fuel bundles are provided, each including a matrix of upstanding rods. These rods can contain either nuclear fuel or moderator. Each fuel rod contains a substantial number of stacked, cylindrical pellets of enriched uranium, the fuel rods being sealed at opposite ends. Moderator rods can contain either liquid water or a solid moderator material. The fuel rods of each bundle are supported on a lower tie plate and extend upwardly from the lower tie plate to an upper tie plate. The fuel bundle is thus defined by a lattice of rows and columns of vertically extending, generally parallel, laterally spaced fuel and moderator rods. In addition to supporting these rods, the lower tie plate permits entry of coolant/moderator water within the fuel bundle. The upper tie plate maintains the matrix of rods upright relative to the lower tie plate and permits the discharge of heated water and generated steam from the interior of the fuel bundle. The fuel bundle also includes spacers, for example, seven such spacers, spaced along the length of the fuel bundle. The spacers serve to maintain the rods laterally spaced from one another and are disposed at intervals along the lengths of the rods. A channel surrounds each fuel bundle and extends from the lower tie plate to the upper tie plate. The channel confines the water flow from the lower tie plate to the upper tie plate. The fuel bundles are positioned in the reactor core between a lower core plate and an overlying top guide.

In operation, water enters each fuel bundle through its lower tie plate. The water acts both as a coolant and a moderator. As a coolant, the water is heated and evolves to steam by heat exchange with the fuel rods. As a moderator, fast neutrons from the nuclear reaction are moderated and become slow-moving or thermal neutrons to continue the chain reaction within the fuel bundle. As the water is heated, the bundles have increasing fractions of steam in the upper two-phase portion of the fuel bundle.

It has been found beneficial to provide one or more less than full-length rods in the nuclear fuel bundle and these rods are called part-length rods. These part-length rods, containing either nuclear fuel or moderator, are supported on a lower tie plate and extend upwardly toward the upper tie plate, terminating short of the upper tie plate in or just above one of the spacers, for example, the fifth or sixth spacer. Thus, a vent volume is defined between the upper tie plate and the upper ends of the part-length rods. The elimination of the upper ends of the part-length rods reduces the pressure drop in a BWR. Stated differently, the provision of a vent volume above the part-length rods increases the area available for vapor and liquid flow, particularly through the spacer openings above the part-length rods which would otherwise be normally restricted by the passage of portions of the full-length rods through such openings. Since the restricted flow paths through the spacers cause a significant portion of the total pressure drop, most of the pressure drop reduction associated with part-length rods results from the removal of rods from spacers located above the upper ends of the part-length rods. It follows that maximizing pressure drop reduction requires minimum length for the part-length rods. However, reducing the length of the part-length rods also reduces the quantity of nuclear fuel or moderator available in the fuel bundle.

In present BWR fuel designs, the part-length rods are supported at their upper ends as cantilevered elements, the main body of the part-length rod extending through openings in the spacers and terminating a few inches above the top of the uppermost part-length rod supporting spacer. This is an effective design to provide for upward fuel expansion but is less effective from a standpoint of optimizing pressure drop and fuel weight or moderator. Current part-length rod designs typically have only short extensions above their uppermost supporting spacer before the rod terminates as a result of a consideration of mechanical and flow vibration issues associated with cantilevered extensions. The competing design requirements of reduced pressure drop and maximization of nuclear fuel and moderator affords an opportunity for improved optimization of pressure drop and fuel weight or moderator using part-length rods.

The present invention seeks to provide a novel and improved fuel bundle for a nuclear reactor having part-length rods wherein the pressure drop across the fuel bundle and the fuel weight or moderator of the bundle with part-length rods can be optimized.

According to the invention, there is provided a fuel bundle for a nuclear reactor comprising: a plurality of upstanding elongated nuclear fuel rods; a lower tie plate for supporting said fuel rods in generally vertically extending orientation; a plurality of spacers spaced one from the other successively above said lower tie plate, with each spacer having a plurality of openings, said fuel rods passing through said openings whereby the spacers maintain the upstanding fuel rods in laterally spaced positions relative to one another throughout the height of the bundle; at least one part-length rod carried by said lower tie plate and extending upwardly therefrom through openings in successive ones of said spacers and terminating in an upper end adjacent to and spaced below one of said openings of a selected spacer; an element interconnecting said upper end of said part-length rod and said selected spacer providing structural support for said part-length rod and configured to enable flow of coolant through said one opening of the selected spacer.

Preferably either the configuration of said upper end of said part-length rod and said selected spacer is such that coolant flows through said one opening with a pressure drop less than the pressure drop through said opening were the part-length rod to extend through said one opening or is such that the coolant flows through said one opening of the selected spacer with a pressure drop across said selected spacer substantially corresponding to the pressure drop of spacers successively above the selected spacer with the part-length rod extending therethrough.

Removal of the associated spacer cell hardware can further reduce pressure drop.

Thus in the present invention, the upper end of the part-length rod is terminated just below the bottom of a spacer. This enables nearly the same fuel weight or moderator with lower pressure drop as compared to the same part-length rod terminating just above the same spacer. Conversely, it allows a higher fuel weight or moderator with nearly the same pressure drop when the part-length rod terminates below the next-higher spacer. Consequently, by extending the part-length rod nearly to the next spacer, hence maximizing fuel weight or moderator, and connecting the upper end of the part-length rod to that spacer in a manner minimizing the pressure drop of coolant flow across that spacer, minimum pressure drop and maximum fuel weight or moderator are achieved when using such part-length rods. Stated differently, the present design can be used to lengthen the part-length rod approximately 80% of one spacer pitch with minimal impact on bundle pressure loss. Alternatively, the present invention can be used with a minor decrease in part-length rod length to improve pressure drop characteristics equivalent to one more spacer without a part-length rod.

More particularly, the present invention terminates the upper end of the part-length rod just below the next superposed spacer and is supported by such spacer in a manner which minimizes the pressure drop of the coolant flow through the spacer. In one form of the present invention, the end plug on the upper end of the part-length rod has a reduced diameter extension or shank which extends through the opening of the spacer which would otherwise be occupied by a full-length rod and which opening defines, with the region in the fuel bundle above the upper end of the part-length rod, a vent volume. A bushing may be mounted on the spacer to receive the reduced diameter shank, the bushing being mounted below, within or above the superposed spacer. Importantly, the flow area between the upper end of the part-length rod and the superposed spacer is such that the pressure drop across the spacer is nearly the same as the pressure drop across overlying spacers without part-length rods. Stated differently, the coolant flow through the opening of the superposed spacer has a pressure drop less than the pressure drop through the opening were the part-length rod to extend through that one opening. This effect can be further enhanced by removing the last spacer cell associated with the top of the part-length rod and attaching the hardware for holding the part-length rod to the surrounding cells. The reduced diameter extension or shank of the end plug of the part-length rod is slidably received in the bushing to enable fuel expansion during operation of the reactor. It will be appreciated that the problems associated with mechanical and flow vibrations are minimized or eliminated with the foregoing described structural support of the cantilevered end of the part-length fuel rod.

In another embodiment, the upper end of the part-length rod is permanently attached to the overlying spacer. The connecting element can be in the form of a small beam, for example, having a cruciform cross-section, which minimizes the pressure drop between the upper end and the spacer. This form, however, requires provision for the part-length rod to expand in a downward direction into the lower tie plate.

In a further aspect of the present invention, separation devices for directing the liquid laterally outwardly into the interstices of surrounding fuel rods and enabling vapor flow through the vent volume may be attached to the part-length rods, the structural elements supporting the fuel rods, or to the overlying spacer adjacent the upper end of the part-length rods. The separation devices may comprise swirlers, i.e., strips of self-supporting material twisted to induce a helical flow pattern in the vent volume, or other types of vanes for directing the liquid laterally outwardly onto the surfaces and into the interstices of the adjacent full-length fuel rods.

The invention will now be described in greater detail, by way of example, with reference to the drawings in which:
FIGURE 1 is a perspective view with parts broken and in cross-section of a fuel bundle according to the present invention;
FIGURE 2a is an enlarged fragmentary side elevational view with parts in cross-section illustrating the connecting element between the upper end of a part-length rod and the overlying spacer;
FIGURE 2b is a view similar to Figure 2a illustrating a spacer with the cell associated with the top of the part-length rod removed.
FIGURE 3 is a view similar to Figure 2a illustrating a further embodiment of the present invention;
FIGURE 4 is a view similar to Figure 2a illustrating the part-length rod with a separation device; and
FIGURE 5 is a view similar to Figure 2a illustrating a separation device carried on the spacer above the part-length rod.

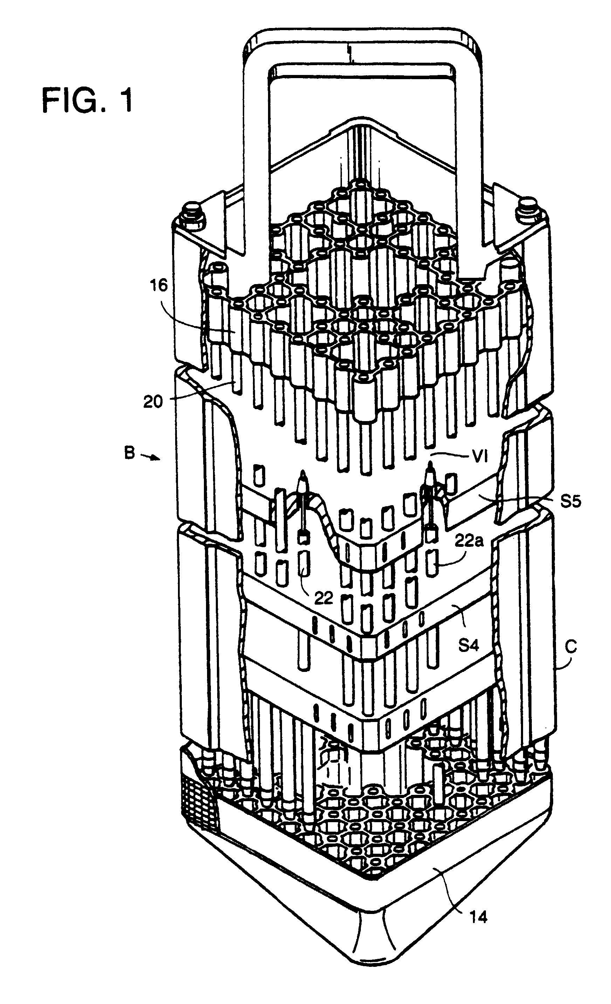

Referring now to the drawing figures, particularly to Figure 1, there is illustrated a fuel bundle, generally designated B, including a plurality of full-length fuel rods 20 and part-length rods 22. Full-length fuel rods 20 extend the full distance between a lower tie plate 14 and an upper tie plate 16. It will be appreciated that the part-length rods 22 extend from the lower tie plate 14, terminating in the fuel bundle B short of the upper tie plate 16. As indicated earlier, the part-length rods may contain nuclear fuel or moderator. A plurality of spacers are provided along the length of the fuel bundle, spacers S4 and S5 being illustrated. A channel C also surrounds the matrix of full and partial-length rods, as well as the spacers, for confining the liquid flow through the fuel bundle.

It will be appreciated that the part-length rods terminate short of the upper tie plate to define one or more steam vent volumes between the part-length rods and the upper tie plate and bounded by laterally adjacent portions of the full-length rods 20. For example, at least one part-length rod 22a terminates just short of spacer S5 and hence a vent volume V1 is defined above the part-length rod 22a and through the upper tie plate 16 bounded by portions of the full-length rods in the adjacent lattice positions. A number of part-length rods are provided the fuel bundle B and hence a plurality of vent volumes V are provided bundle B. It will be appreciated that the part-length rods may be grouped together to create larger superimposed vent volumes than defined by a single part-length rod. Also, while a 9x9 array of fuel rods is illustrated, it will be appreciated that other combinations of fuel rods and part-length rods may be used to form the fuel bundles, such as 8x8 or 10x10 arrays.

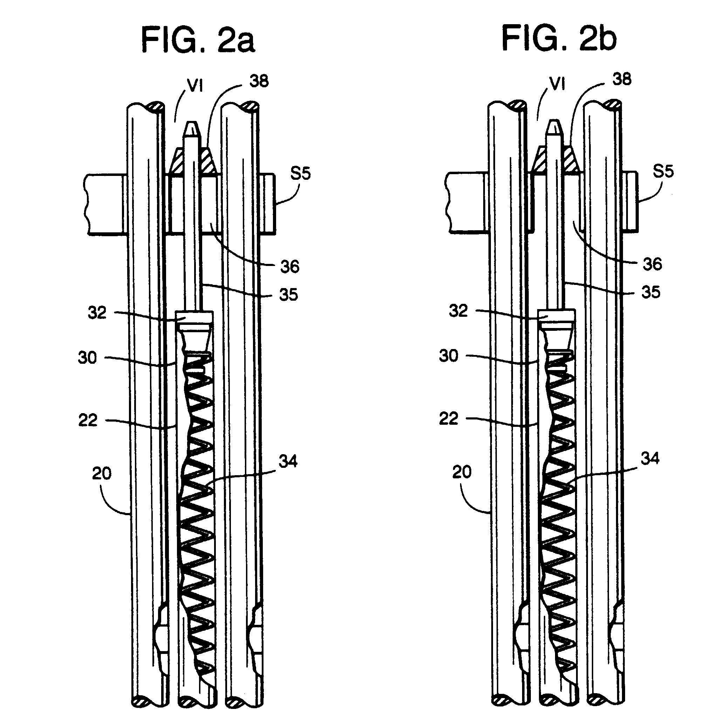

Referring now to drawing Figure 2a, the upper end 30 of a part-length rod 22 is illustrated and is closed by an end plug 32. As conventional, the upper portions of fuel rods, including part-length fuel rods, each carry a spring 34 for positioning fuel pellets below the spring within the rod, the upper portions also providing a plenum enabling gas expansion within the rod. As illustrated in Figure 2a, it will be seen that the upper end 30 of the part-length rod 22a terminates just below the overlying spacer S5. Thus, instead of terminating within a spacer or just above a spacer as in the prior art, the part-length rods of the present invention terminate just below the overlying spacer a distance very close to, but sufficiently spaced from, the overlying spacer to permit flow of coolant past the upper end of the rod 22 and into the opening or cell of the spacer virtually without or minimal pressure drop.

To couple the upper end of the part-length rod 22 to a spacer S and, hence, minimize or avoid mechanical and/or flow-induced vibration associated with the cantilevered end of the rod 22, a reduced diameter shank 35 is formed on the end plug 32 and extended through the opening 36 in spacer S5. A bushing 38 is coupled to the upper face of the spacer S5 and extends above spacer S5. The bushing comprises a support element having a very thin circular wall supported by support legs which form a cruciform cross-section enabling outflow of liquid from opening 36 past the bearing 38 without substantial pressure drop. The shank of the end plug 32 is slidably received within the circular opening of the bushing to enable the part-length rod to expand axially during use. Other shapes for the bearing structure may be used provided minimum flow restriction and hence minimum pressure drop is maintained across the opening 36 through the spacer. The bearing 38 may also lie wholly within the spacer between its opposite sides (its upper and lower surfaces) or may lie below the spacer. Minimum pressure drop is achieved, however, with the bearing 38 lying to one side or the other of the spacer.

With this construction, it will be seen that the length of each part-length rod has been increased to a location just below the overlying spacer whereas previously the upper end of each part-length rod was terminated in or slightly above a spacer. Consequently, by extending the upper end of the part length rod upwardly toward the next overlying spacer, increased fuel or moderator capacity within the part-length rod is obtained. Moreover, the pressure drop through the opening 36 and bearing 38 is essentially the same pressure drop as through openings in spacers above the spacer containing the shank of the end plug. Thus, the fuel or moderator capacity of the part-length rod has been increased without sacrificing the reduction in pressure drop by providing vent volumes above part-length rods within the bundle. Preferably, the part-length rod can be extended to approximately 80% of one spacer pitch with minimal impact on bundle pressure loss and it will be appreciated that a lower limit of 50% of the spacer pitch would afford usable increase in fuel or moderator capacity while minimizing pressure drop.

In Figure 2b, a similar arrangement as in Figure 2a is illustrated except that the cell associated with the overlying spacer S5 has been removed and hence the volume flow capacity through that opening has been increased. It will be appreciated that ferrules are often used in spacers and that the ferrule or cell in the overlying spacer can be removed to open the flow volume in that region.

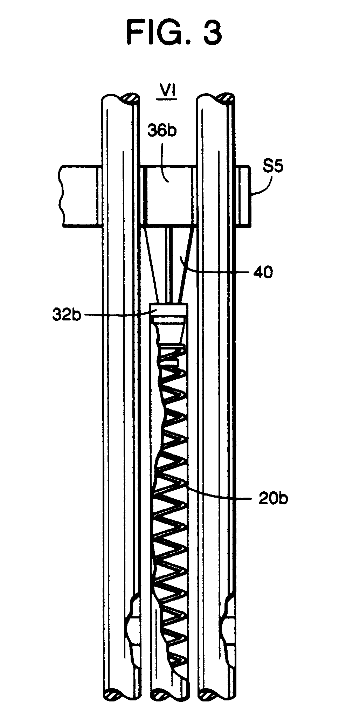

Referring now to Figure 3, there is illustrated the upper end of a part-length rod 20b which terminates in an end plug 32b. A structural connection or element 40 is provided between the end plug and the spacer and in a manner which minimizes pressure drop. In this form, a generally cruciform thin structural support extends from the lower side of the spacer S5 to the end plug 32b, hence supporting and rigidly connecting the cantilevered upper end of the part-length fuel rod 20b to the spacer. The cruciform cross-section of the support element 40 enables flow of coolant within its quadrants and through the spacer opening 36b without substantial pressure drop. It will be appreciated that other shapes of the support element 40 may be provided to interconnect the spacer and upper end of the part-length rod provided the pressure drop is maintained at a minimum. In this form, the lower end of the part-length rod is constructed to enable the rod to expand downward into the lower tie plate.

With the foregoing arrangements, it will be appreciated that the shank and support element are configured to enable flow of coolant through the opening 36b of the superposed spacer with a pressure drop less than the pressure drop through the opening were the part-length rod to extend through that opening. That is, the pressure drop across the spacer directly above the upper end of the part-length rod substantially corresponds to the pressure drop across spacers in the vent volume above the part-length rod supporting spacer without the part-length rod extending through the spacer opening.

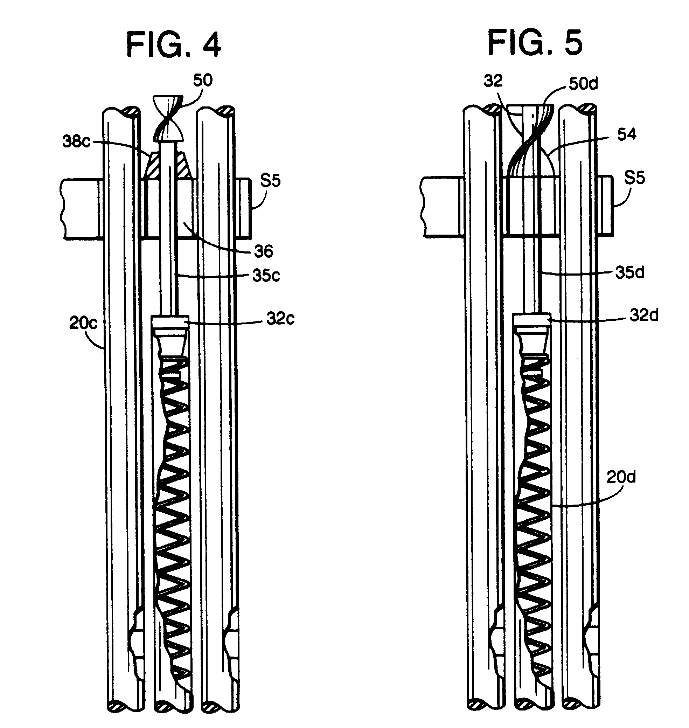

Referring now to Figure 4, there is illustrated the arrangement of Figure 2 with the addition of a flow separation device 50. The flow separation device in this form is mounted on the upper end of the shank 35c of the end plug 32c. The separation device 50 is for the purpose of deflecting liquid laterally outwardly onto the surfaces and into the interstices of the fuel rods adjacent the vent volume and enabling flow of vapor upwardly through the vent volume. In the illustrated form, the separation device comprises a swirler composed of a vane twisted 180°. Swirler 50 is illustrated to extend only a short length above the part-length fuel rod, i.e., on the order of 1 to 2 diameters of the swirler. Longer swirlers involve trade-offs between pressure drop and separation effectiveness. Liquid flowing upwardly through the opening 36 and past the bearing 38c is deflected laterally outwardly by swirler 50 onto the surfaces and into the interstices of the adjacent full-length fuel rods.

Referring now to Figure 5, a separation device 50d is mounted directly on the spacer S5. The separation device 50d may comprise a central sleeve 52 having spiral vanes extending radially from the sleeve. The sleeve 52 slidably receives the shank portion 35d of the end plug 32d of the part-length rod 20d thereby enabling axial expansion of the part-length rod. The flow through the opening in the spacer is directed by the swirler laterally outwardly onto the surfaces and into the interstices of the full-length fuel rods.

It will be appreciated that the separation devices described herein may take forms other than swirlers. For example, flow vanes or radial deflectors may be used. Thus, any configuration which directs liquid laterally outwardly of the vent volume onto the surfaces and into the interstices of the full-length fuel rods with minimum pressure drop may be used.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A fuel bundle for a nuclear reactor comprising:
a plurality of upstanding elongated nuclear fuel rods;
a lower tie plate for supporting said fuel rods in a generally vertically extending orientation;
a plurality of spacers spaced one from the other successively above said lower tie plate, with each spacer having a plurality of openings, said fuel rods passing through said openings whereby the spacers maintain the upstanding fuel rods in laterally spaced positions relative to one another throughout the height of the bundle;
at least one part-length rod carried by said lower tie plate and extending upwardly therefrom through openings in successive ones of said spacers and terminating in an upper end adjacent to and spaced below one of said openings of a selected spacer;
an element interconnecting said upper end of said part-length rod and said selected spacer providing structural support for said part-length rod and configured to enable flow of coolant through said one opening of the selected spacer.

2. A fuel bundle according to claim 1, wherein the configuration of said upper end of said part-length rod and said selected spacer is such that coolant flows through said one opening with a pressure drop less than the pressure drop through said opening were the part-length rod to extend through said one opening.

3. A fuel bundle according to claim 1, wherein the configuration of said part-length rod and said selected spacer providing structural support for said part-length rod is such that the coolant flows through said one opening of the selected spacer with a pressure drop across said selected spacer substantially corresponding to the pressure drop across spacers successively above the selected spacer without the part-length rod extending therethrough.

4. A fuel bundle according to Claim 1, 2 or 3, wherein said element comprises a shank of an end plug secured to the upper end of said part-length rod, said shank having a reduced cross-sectional area as compared with the cross-sectional area of said part-length rod.

5. A fuel bundle according to Claim 4 wherein said selected spacer mounts a bearing for slidably receiving said shank enabling relative movement between said selected spacer and said shank.

6. A fuel bundle according to Claim 1, 2 or 3, wherein said element extends from said selected spacer toward the upper end of said part-length rod and defines a flow area between said upper end and said spacer in excess of a flow area through said one opening of the selected spacer were the art-length rod to extend through said one opening.

7. A fuel bundle according to Claim 1, 2 or 3, including a vent volume above the upper end of the part-length rod and in part defined by laterally adjacent fuel rods and a separation device disposed in said vent volume for directing liquid laterally outwardly onto the surfaces and into the interstices of the fuel rods.

8. A fuel bundle according to Claim 7 wherein said separation device is carried by said selected spacer.

9. A fuel bundle according to Claim 7 wherein said separation device is carried by said element.
